# DEMANDE DE BREVET EUROPEEN

(11) **EP 4 572 132 A1**
(43) Date de publication de la demande: **18.06.2025**
(21) Numéro de dépôt: 24219061.9
(22) Date de dépôt: 11.12.2024
(51) Int. Cl.: H02S 20/23, H02S 30/00

(54) **COUVERTURE POUR ABRI PHOTOVOLTAÏQUE, ET PROCÉDÉ D ASSEMBLAGE D'UNE TELLE COUVERTURE**

(30) Priorité: 14.12.2023 FR 2314209
(71) Demandeur: Heolian, 35170 Bruz (FR)
(72) Inventeur: BROSSE, Julien, 35131 Chartres de Bretagne (FR)
(74) Mandataire: Boüan du Chef du Bos, Louis-Paterne

(57) **Abrégé**

La présente invention concerne une couverture pour abri photovoltaïque, la couverture comprenant une structure de support et au moins deux panneaux photovoltaïques (31, 32), juxtaposés de telle sorte qu'une portion de leurs champs externes (52) soient en regard l'un de l'autre, et entourent un joint d'étanchéité (6). Selon l'invention, la couverture comprend au moins une pince de serrage (7), dont les mors prennent appui sur les cadres (314, 324) des panneaux photovoltaïques (31, 32) juxtaposés et qui présente des moyens de réglage permettant de rapprocher les cadres (314, 324) des panneaux photovoltaïques (31, 32) juxtaposés et ainsi de comprimer le joint (6).

L'invention concerne également un procédé d'assemblage d'une telle couverture pour abri photovoltaïque.

## Description

### Domaine de l'invention

La présente invention concerne les abris qui sont recouverts d'une couverture comprenant des cellules photovoltaïques.

En particulier, l'invention concerne les couvertures mises en oeuvre sur de tels abris.

Elle concerne également les procédés d'assemblage de telles couvertures.

### Art antérieur

Il est courant d'équiper les toitures de bâtiments avec des panneaux photovoltaïques, permettant de capter l'énergie lumineuse provenant du soleil pour produire de l'électricité. Les panneaux de cellules photovoltaïques sont souvent placés au-dessus de la toiture, qui sert à assurer l'étanchéité du bâtiment. Les panneaux photovoltaïques n'ont donc, dans ce cas, aucune fonction d'étanchéité.

Dans d'autres cas, des panneaux photovoltaïques peuvent être utilisés pour assurer l'étanchéité de la couverture d'un bâtiment. C'est souvent le cas pour les abris légers, tels que les abris de protection de véhicules usuellement désignés par l'expression anglaise « carport ».

Une telle utilisation de panneaux photovoltaïques présente cependant des difficultés. Ainsi, le panneau photovoltaïque, qui est généralement constitué d'une plaque enserrée dans un cadre, est globalement étanche à l'eau. Cependant, de tels panneaux ne sont pas conçus pour être juxtaposés de façon étanche. Au contraire, quand de tels panneaux sont montés sur une structure telle qu'un abri pour en former la couverture, un interstice apparaît généralement entre les cadres formant les bords de deux panneaux adjacents. En cas d'intempéries, l'eau peut pénétrer dans ces interstices. Il est donc nécessaire de prévoir, sous chaque interstice entre deux panneaux photovoltaïques adjacents, une gouttière récupérant l'eau qui s'infiltre entre les panneaux, et assurant son évacuation.

La mise en oeuvre de telles gouttières est délicate et coûteuse. Il est notamment difficile de positionner les gouttières avec une pente suffisante pour assurer l'écoulement de l'eau recueillie quand les bords correspondants des plaques s'étendent horizontalement. Cette difficulté de positionnement des gouttières est d'autant plus forte quand la surface de couverture réalisée avec des panneaux photovoltaïques augmente.

Il a été proposé, notamment par le document FR2968740A1, de placer sur les couvertures réalisées par des panneaux photovoltaïques des joints de masquage recouvrant les interstices apparaissant entre les panneaux adjacents. Ces joints permettent de réduire la quantité d'eau pénétrant dans ces interstices. Quand l'écartement entre les deux panneaux adjacents n'est pas parfaitement maitrisé, ils sont cependant insuffisants pour assurer une étanchéité correcte de la couverture ainsi réalisée, et ne suppriment donc pas la nécessité de placer des gouttières sous les interstices.

Il a également été proposé, par exemple par le document FR2968376A1, d'adapter les bords des panneaux photovoltaïques pour qu'ils puisent s'assembler les uns aux autres de façon étanche. De telles solutions exigent cependant de grosses modifications des cadres des panneaux photovoltaïques, et les panneaux spécifiques obtenus ne sont compatibles qu'avec des panneaux spécifiques du même type. Ces solutions, coûteuses, ne sont donc pas applicables aux panneaux photovoltaïques présentant les configurations les plus courantes.

### Exposé de l'invention

La présente invention a pour objectif de pallier ces inconvénients de l'art antérieur.

En particulier, l'invention a pour objectif de permettre la mise en oeuvre de couvertures composées de panneaux photovoltaïques, notamment pour des abris, qui offrent une étanchéité suffisante en réduisant le besoin de gouttières.

Un objectif particulier de l'invention est de proposer de telles couvertures pouvant couvrir une surface importante.

Un autre objectif de l'invention est de proposer de telles couvertures pouvant être mises en oeuvre rapidement et facilement.

Encore un autre objectif de l'invention est de permettre la mise en oeuvre de telles couvertures en utilisant des panneaux photovoltaïques simples, d'un type couramment utilisé et bon marché.

L'invention a également pour objectif de permettre la mise en oeuvre de telles couvertures sans entrainer de modification ou de détérioration des panneaux photovoltaïques utilisés.

Ces objectifs, ainsi que d'autres qui apparaîtront plus clairement par la suite, sont atteints à l'aide d'une couverture pour abri photovoltaïque, la couverture comprenant une structure de support et au moins deux panneaux photovoltaïques, portés par la structure de support, chacun des panneaux photovoltaïques étant constitué par au moins une plaque dont les bords sont encadrés par un cadre, ce cadre formant, autour de la plaque, un champ externe sensiblement parallèle au bord de la plaque et sensiblement perpendiculaire au plan de la plaque, ce champ externe formant la surface périphérique du panneau photovoltaïque, les panneaux photovoltaïques étant juxtaposés, sensiblement dans un même plan, de telle sorte qu'une portion rectiligne du champ externe d'un premier des panneaux photovoltaïques soit en regard d'une portion rectiligne du champ externe d'un second des panneaux photovoltaïques, la couverture comprenant au moins un joint d'étanchéité placé entre les portions rectilignes du champ externe des premier et second panneaux photovoltaïques.

Selon l'invention, cette couverture comprend au moins une pince de serrage, cette pince de serrage comprenant deux mors, un premier des mors prenant appui sur une surface du cadre du premier panneau photovoltaïque qui est orientée dans un sens opposé à la portion rectiligne du champ externe de ce premier panneau photovoltaïque, et un second des mors prenant appui sur une surface du cadre du second panneau photovoltaïque qui est orientée dans un sens opposé à la portion rectiligne du champ externe de ce second panneau photovoltaïque, la pince de serrage présentant des moyens de réglage de l'écartement entre les premier et second mors, le joint d'étanchéité étant comprimé entre les portions rectilignes du champ externe des premier et second panneaux photovoltaïques, sous l'effet du serrage des portions rectilignes du champ externe des premier et second panneaux photovoltaïques obtenu par les moyens de réglage de la pince.

La couverture selon l'invention permet ainsi d'obtenir facilement une étanchéité efficace de la jonction entre deux panneaux photovoltaïques, grâce au joint d'étanchéité qui est comprimé, après sa mise en place entre les champs externes des panneaux photovoltaïques, par le rapprochement des panneaux photovoltaïques l'un de l'autre. L'utilisation de pinces pour effectuer ce rapprochement permet avantageusement de mettre en oeuvre l'invention avec des panneaux photovoltaïques de type standard, qui ne sont pas modifiés ou détériorés par cet assemblage.

Une surface du cadre d'un panneau photovoltaïque orientée dans un sens opposé au champ externe de ce panneau est, au sens de la présente description, une surface du cadre sur laquelle il est possible de prendre appui pour déplacer le panneau photovoltaïque dans une direction normale à son champ externe. Selon les circonstances, cette surface peut ne pas être plane, on ne pas être parallèle au champ externe.

Selon un mode de réalisation avantageux, le joint d'étanchéité est collé sur la portion rectiligne du champ externe de l'un des premier ou second panneaux photovoltaïques.

Le joint peut ainsi être facilement positionné de façon précise. Par ailleurs, ce collage peut avantageusement permettre d'assurer l'étanchéité entre le joint et le champ externe du panneau photovoltaïque.

De préférence, ce joint d'étanchéité présente des lèvres souples aptes à être déformées par compression, sur au moins une de ses surfaces qui est en contact avec une des portions rectilignes du champ externe sans y être collée.

Une telle forme de joint permet d'assurer une bonne étanchéité quand le joint est comprimé, tout en permettant une légère tolérance sur l'écartement entre les deux champs externes entre lesquels le joint est placé.

De préférence, la couverture comprend plusieurs des pinces prenant appui chacune sur les cadres des premier et second panneaux, ces pinces étant réparties sur la longueur des portions rectilignes juxtaposées des champs externes des premier et second panneaux photovoltaïques.

Cette répartition des pinces permet de répartir le serrage des panneaux photovoltaïques l'un contre l'autre, et d'éviter les déformations excessives des cadres de ces panneaux photovoltaïques sous l'effet du serrage.

Avantageusement, au moins une des pinces présente deux branches mobiles en translation l'une par rapport à l'autre, chacune des branches portant l'un des mors.

Une telle pince, qui présente ainsi la structure d'un étau, ou d'un serre-joint, est particulièrement efficace pour maintenir durablement l'écartement entre les panneaux photovoltaïques.

Avantageusement, les mors d'au moins une des pinces présentent des pointes.

Les mors peuvent ainsi, quand ils sont plaqués contre une surface du cadre, y adhérer sans risque de glissement.

Selon un mode de réalisation avantageux, les moyens de réglage de l'écartement entre les mors d'au moins l'une des pinces comprennent au moins une vis.

Un tel moyen de réglage est très facile à mettre en oeuvre.

Selon un mode de réalisation avantageux, les premier et second panneaux photovoltaïques définissent un plan incliné, la jonction entre les portions rectilignes du champ externe des premier et second panneaux photovoltaïques s'étendant selon une direction sensiblement horizontale, sensiblement perpendiculaire à la direction d'inclinaison maximale de ces premier et second panneaux photovoltaïques.

La couverture selon l'invention peut ainsi présenter des jonctions horizontales entre les panneaux, dont l'étanchéité est assurée sans qu'il soit nécessaire de prévoir des gouttières en dessous de ces jonctions.

L'invention concerne également un procédé d'assemblage d'une couverture pour abri photovoltaïque tel que décrit ci-dessus, le procédé comprenant :
- une étape de positionnement, sur la structure de support, de deux panneaux photovoltaïques, juxtaposés sensiblement dans un même plan, de telle sorte qu'une portion rectiligne du champ externe d'un premier des panneaux photovoltaïques soit en regard d'une portion rectiligne du champ externe d'un second des panneaux photovoltaïques, et d'au moins un joint d'étanchéité entre lesdites portions rectilignes du champ externe des premier et second panneaux photovoltaïques,
- une étape de mise en place d'au moins une pince de serrage, un premier des mors de la pince, ou de chacune des pinces, prenant appui sur une surface du cadre du premier panneau qui est orientée dans un sens opposé à la portion rectiligne du champ externe de ce premier panneau photovoltaïque, et un second des mors de la pince, ou de chacune des pinces, prenant appui sur une surface du cadre du second panneau qui est orientée dans un sens opposé à la portion rectiligne du champ externe du second panneau photovoltaïque,
- une étape de serrage de la pince, ou de chacune des pinces, entrainant la compression du joint d'étanchéité entre les portions de champs externes des premier et second panneaux photovoltaïques.

### Description des figures

L'invention sera mieux comprise à la lecture de la description suivante de modes de réalisation préférentiels, donnée à titre de simple exemple figuratif et non limitatif, et accompagnée des figures parmi lesquelles :
- La [Fig.1] est une représentation en perspective d'un abri équipé d'une couverture comprenant des panneaux photovoltaïques.
- La [Fig.2] est une vue de coupe transversale d'un panneau photovoltaïque mis en oeuvre sur la couverture de l'abri de la [Fig.1].
- La [Fig.3] est une vue de coupe d'une portion de la couverture de l'abri de la [Fig.1] au cours d'une première étape de son assemblage.
- La [Fig.4] est une représentation en perspective d'un joint mis en oeuvre dans la couverture de l'abri de la [Fig.1].
- La [Fig.5] est une représentation en perspective d'une pince de serrage mise en oeuvre dans la couverture de l'abri de la [Fig.1].
- La [Fig.6] est une vue de coupe de la portion de couverture de la [Fig.3], au cours d'une seconde étape d'assemblage.
- La [Fig.7] est une représentation en perspective de la portion de couverture de la [Fig.6], au cours de la seconde étape d'assemblage.
- La [Fig.8] est une vue de coupe de la portion de couverture de la [Fig.6], après la finalisation de son assemblage.
- La [Fig.9] est une représentation en perspective de la portion de couverture de la [Fig.8], après la finalisation de son assemblage.
- La [Fig. 10] est une représentation en perspective, vue de dessous, de deux des panneaux photovoltaïques de la couverture de l'abri de la [Fig.1], assemblés l'un à l'autre.

### Description des modes de réalisation

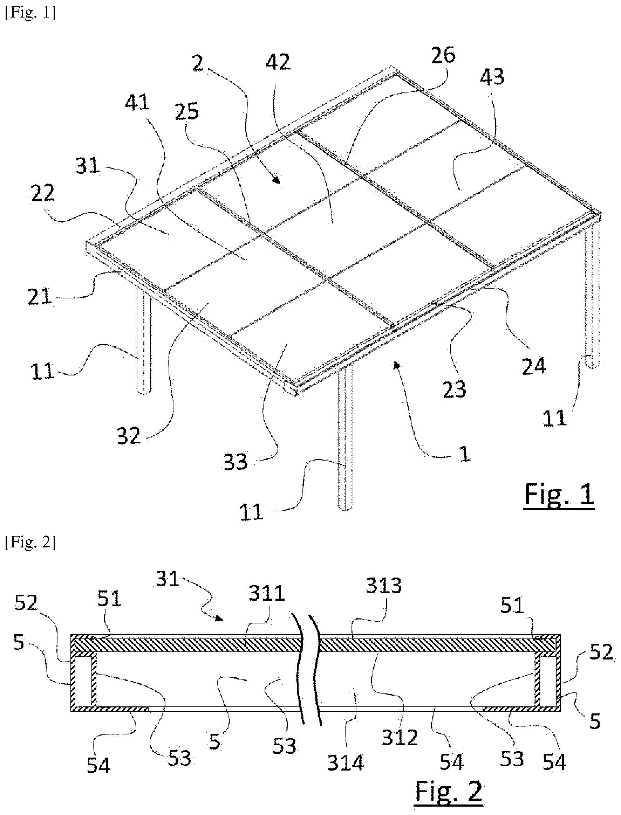

La [Fig.1] est une représentation en perspective d'un abri photovoltaïque 1 selon un mode de réalisation de l'invention. Cet abri comprend des pieds 11 qui supportent une couverture 2. Cette couverture 2 est formée par la juxtaposition de neuf panneaux photovoltaïques, posés sur une structure de support 21 qui peut classiquement être constituée de poutres portées par les pieds 11.

De façon classique, la couverture 2 est inclinée pour permettre l'écoulement de l'eau. Ainsi, son bord supérieur 22 et son bord inférieur 23 s'étendent sensiblement horizontalement, le bord supérieur 22 étant plus haut que le bord inférieur 23. Le bord inférieur 23 est équipé d'une gouttière 24, destinée à collecter l'eau de pluie s'écoulant sur la couverture 2.

Les panneaux photovoltaïques formant la couverture 2 sont assemblés les uns avec les autres en trois sous-ensembles 41, 42 et 43 juxtaposés dans un même plan, chaque sous-ensemble s'étendant depuis le bord supérieur 22 jusqu'au bord inférieur 23. Un premier sous-ensemble 41 est formé par les panneaux photovoltaïques 31, 32 et 33, assemblés de façon à être juxtaposés dans un même plan. Le second sous-ensemble 42 et le troisième sous-ensemble 43 sont avantageusement identiques ou sensiblement identiques au premier sous-ensemble 41, et sont formés de panneaux photovoltaïques semblables aux panneaux photovoltaïques 31, 32 et 33. Ces sous-ensembles 42 et 43 ne seront donc pas décrits en détail.

Chacun des sous-ensembles 41, 42 et 43 formant la couverture 2 est juxtaposé à au moins un autre des sous-ensembles, en laissant un interstice entre les bords latéraux des deux sous-ensembles voisins. Ainsi, un interstice 25 apparaît entre le premier sous-ensemble 41 et le second sous-ensemble 42 et un interstice 26 apparaît entre le second sous-ensemble 42 et le troisième sous-ensemble 43. De façon classique, une gouttière est placée sous les panneaux photovoltaïques constituant la couverture 2, sous chaque interstice 25 et 26. Ces gouttières peuvent avantageusement présenter la même inclinaison que la couverture 2, ce qui permet l'écoulement correct de l'eau. A l'extrémité inférieure des interstices 25 et 26, ces gouttières débouchent dans la gouttière 24, afin de permettre l'évacuation de l'eau qu'elles recueillent. Les interstices 25 et 26 peuvent avantageusement être recouverts par des joints de masquage, qui ont une fonction essentiellement esthétique et n'empêchent pas la pénétration d'eau dans ces interstices 25 et 26.

La [Fig.2] est une représentation, en vue de coupe transversale, du panneau photovoltaïque 31 mis en oeuvre dans l'abri 1. Ce panneau 31 comporte une plaque 311 rectangulaire, présentant une face inférieure 312, et une face supérieure 313 qui porte des cellules photovoltaïques. Les quatre bords de cette plaque 311 sont enchâssés dans une rainure 51 d'un profilé 5, qui forme un cadre 314 entourant la plaque 311. Un joint (non représenté) ou de la colle peuvent assurer la solidité et l'étanchéité de la jonction entre les bords de la plaque 311 et le profilé 5.

Le profilé 5 formant le cadre 314 présente typiquement un champ externe 52, formant le bord périphérique du panneau 31, ce champ externe 52 s'étendant dans un plan sensiblement parallèle au bord de la plaque 311 et perpendiculaire au plan défini par cette plaque 311.

De façon classique, le cadre 314 constitué par le profilé 5 dépasse peu au-dessus de la face supérieure 313 de la plaque 311. En revanche, il dépasse de la face inférieure 312 de la plaque 311, sur une hauteur de plusieurs centimètres, pour former une bordure entourant la face inférieure 312 de la plaque. Cette bordure s'étend entre le champ externe 52 et un rebord interne 53 du profilé 5 formant le cadre 314, ce rebord interne 53 s'étendant dans un plan sensiblement parallèle au champ externe 52, tout en étant orienté dans le sens opposé.

Dans le mode de réalisation représenté, le cadre 314 constitué par le profilé 5 présente également une aile 54, qui est portée par la bordure et qui s'étend en regard de la face inférieure 312 de la plaque 311, parallèlement et à distance de celle-ci, sur une largeur de quelques centimètres.

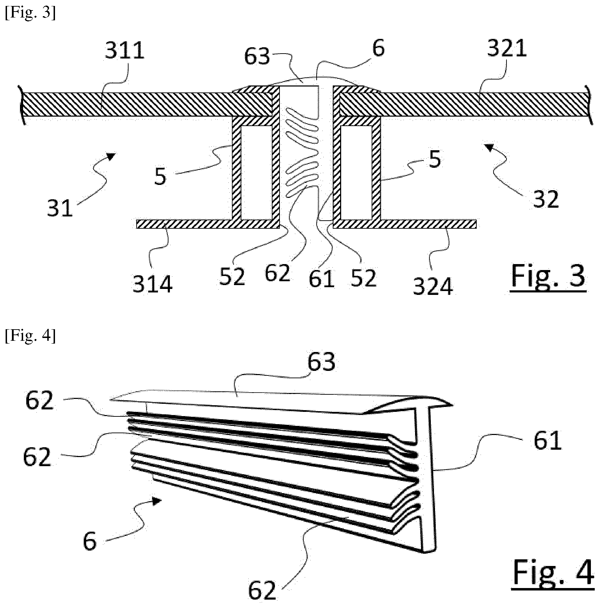

Sur la couverture 2 de l'abri 1 représenté par la [Fig.1], les trois panneaux photovoltaïques formant chacun des sous-ensembles sont avantageusement assemblés les uns aux autres, dans un même plan, de façon propre à assurer l'étanchéité de la jonction entre deux panneaux adjacents. Les figures 3, 6 et 7 représentent plusieurs étapes de cet assemblage entre le panneau photovoltaïque 31 et le panneau photovoltaïque 32, pour former le premier sous-ensemble 41.

L'assemblage entre les panneaux 32 et 33, ainsi que les assemblages des panneaux formant chacun des autres sous-ensembles 42 et 43 de la couverture 2 sont avantageusement réalisés de la même façon que l'assemblage des panneaux 31 et 32, et ne sont donc pas décrits en détail.

Les panneaux 31 et 32 sont chacun formés par une plaque, respectivement 311 et 321, qui est encadrée par un cadre, respectivement 314 et 324. Les deux cadres 314 et 324 sont avantageusement formés par des profilés 5 identiques.

Au cours d'une première étape d'assemblage, représentée par la [Fig.3], les panneaux 31 et 32 sont placés dans un même plan, bord à bord, de telle manière que des portions rectilignes des champs externes 52 des profilés 5 formant leurs cadres 314 et 324 se font face, dans des plans sensiblement parallèles.

Ce placement des panneaux 31 et 32 dans un même plan peut par exemple résulter d'un positionnement des cadres sur des poutres de la structure de support 21. Un premier de ces panneaux 31 et 32 peut être fixé à cette structure 21, par exemple par vissage, avant l'assemblage des panneaux entre eux. Le second de ces panneaux n'est préférentiellement pas fixé à la structure de support avant d'être assemblé au premier panneau.

Au cours de cette première étape d'assemblage, un joint 6 est placé entre les champs externes 52 se faisant face des profilés 5 des cadres 314 et 324. Ce joint 6 est représenté en perspective par la [Fig.4]. Dans le mode de réalisation représenté, ce joint 6 présente une surface plane 61, qui est plaquée contre le champ externe 52 du profilé 5 formant le cadre 324, et une pluralité de lèvres souples 62 s'étendant dans le sens opposé. Ces lèvres souples 62 peuvent entrer en contact avec le champ externe 52 du profilé 5 formant le cadre 314.

Un tel joint 6, présentant des lèvres souples 62, présente l'avantage d'assurer efficacement l'étanchéité entre les champs externes entre lesquels il est compressé, y compris quand l'écartement entre ces champs externes présente de légères variations. Ainsi, à titre d'exemple, le joint 6 représenté peut assurer efficacement l'étanchéité entre les champs externes 52, tant que l'écartement entre ces champs externes 52 est compris entre 5 mm et 7 mm. L'étanchéité peut donc être assurée par ce joint 6 y compris si les champs externes 52 ne sont pas parfaitement parallèles l'un à l'autre, ou s'ils ont subi des légères déformations affectant leur planéité.

Dans d'autres modes de réalisation, il est possible d'utiliser tout autre type de joint connu de l'homme du métier, ce joint étant capable, quand il est comprimé, d'assurer l'étanchéité d'un interstice présentant une largeur variable.

Ce joint 6 présente également une portion de recouvrement 63, destinée à s'étendre sur la face supérieure des profilés 5 des cadres 314 et 324. Cette portion de recouvrement 63 permet de masquer les interstices entre les panneaux 31 et 32 adjacents. Elle peut également permettre de faciliter le positionnement correct du joint 6 dans l'interstice. Cette portion de recouvrement 63 ne présente en revanche qu'une contribution modeste à l'étanchéité de la jonction entre les panneaux 31 et 32. Il est d'ailleurs possible de mettre en oeuvre l'invention avec un joint 6 ne présentant pas de telle portion de recouvrement 63.

Dans le mode de réalisation représenté, la surface plane 61 du joint 6 est collée sur le champ externe 52 du profilé 5 formant le cadre 324, avant l'assemblage des panneaux 31 et 32. Ce collage assure une bonne étanchéité entre le joint 6 et le profilé 5 formant le cadre 324, et un positionnement correct du joint 6 sur ce profilé.

Il est également possible, selon l'autres modes de réalisation, que le joint ne soit pas collé à l'un des champs externes 52, mais simplement positionné entre ces champs externes 52. Il peut par exemple être positionné correctement entre ces champs externes 52 si la portion de recouvrement 63 du joint prend appui sur les cadres 314 et 324 présentant ces champs externes 51 et 52. Dans un tel cas, le joint peut présenter des lèvres souples sur chacune de ses faces destinée à être en contact avec l'un des champs externes 51 ou 52.

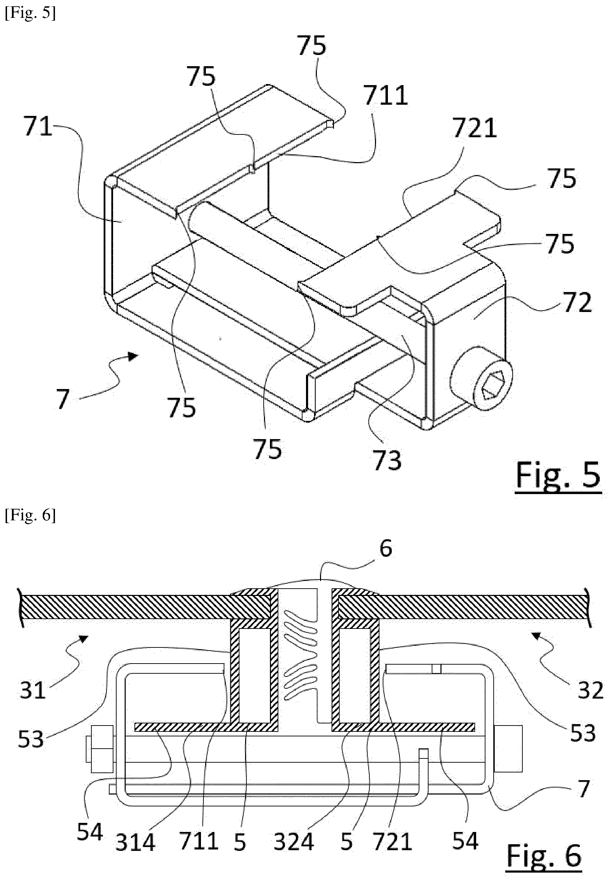

Selon l'invention, la jonction entre les panneaux photovoltaïques 31 et 32 est assurée par des pinces 7 venant serrer l'un contre l'autre les profilés 5 des cadres 314 et 324, en plusieurs points de la jonction entre les panneaux 31 et 32. Une telle pince 7 est représentée par la [Fig.5], et est visible sur les figures 6 à 9. Elle comprend deux branches 71 et 72, formées par des plaques métalliques pliées, qui sont montées coulissantes l'une par rapport à l'autre. Chacune de ces deux branches 71 et 72 présente un bord formant un mors, respectivement 711 et 721. Ces deux mors 711 et 721 se font face, de telle façon que le coulissement de la branche 71 par rapport à la branche 72 ait pour effet de rapprocher l'un de l'autre les mors 711 et 721, ou au contraire de les éloigner.

Dans le mode de réalisation représenté, les bords des branches 71 et 72 formant les mors 711 et 721 présentent avantageusement une forme non rectiligne, afin de mieux prendre appui, sans glissement, sur les surfaces à serrer. Ainsi, comme le montre la [Fig.5], chacun des mors 711 et 721 présente une pluralité de pointes 75, qui peuvent s'enfoncer légèrement dans la surface interne des profilés 5, lors du serrage de la pince, pour assurer un bon maintien des mors sur les surfaces serrées.

Avantageusement, un moyen de réglage permet d'actionner le coulissement de la branche 71 par rapport à la branche 72 dans un sens assurant le rapprochement des mors 711 et 721, pour régler l'écartement entre les mors. Ce moyen de réglage est, dans le mode de réalisation représenté, constitué par un boulon 73 prenant appui d'une part sur la branche 71 et d'autre part sur la branche 72. Le vissage de ce boulon 73 entraîne le rapprochement des branches 71 et 72 et donc le rapprochement des mors 711 et 721.

Il est à noter que, dans d'autres modes de réalisation, l'invention peut être mise en oeuvre avec des pinces de type différent, comprenant un moyen de serrage permettant de rapprocher ses mors l'un de l'autre.

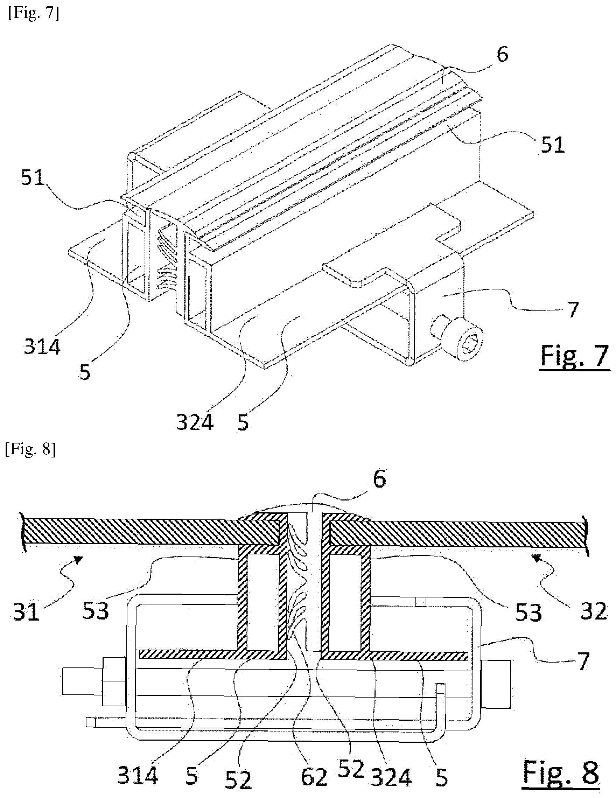

Au cours d'une seconde étape de l'assemblage des panneaux photovoltaïques 31 et 32, qui est représentée par les figures 6 et 7, des pinces 7 sont montées sur les profilés 5 des cadres 314 et 324 de telle sorte que l'un de leurs mors entre en contact, respectivement, avec les rebords internes 53 des profilés 5 des cadres 314 et 324. Ainsi, dans la configuration représentée par les figures 6 à 9, le mors 711 entre en contact avec le rebord interne 53 du profilé 5 du cadre 314 et le mors 721 entre en contact avec le rebord interne 53 du profilé 5 du cadre 324. De façon avantageuse, les branches 71 et 72 sont conformées de façon à ne pas entrer en collision avec les ailes 54 des profilés 5.

Quand des pinces 7 sont montées sur les profilés 5 des cadres 314 et 324, à plusieurs endroits de la jonction entre les panneaux photovoltaïques 31 et 32, ces pinces 7 peuvent être resserrées, par le vissage des boulons 73 constituant les moyens de serrage. Ce vissage peut avantageusement être réalisé jusqu'à un couple de serrage prédéterminé. Selon un autre procédé de montage possible, le serrage peut être effectué jusqu'à ce que l'écartement entre deux panneaux photovoltaïques 31 et 32 atteigne une valeur prédéterminée. Cette valeur peut avantageusement être vérifiée, lors du montage, par l'utilisation d'un gabarit approprié.

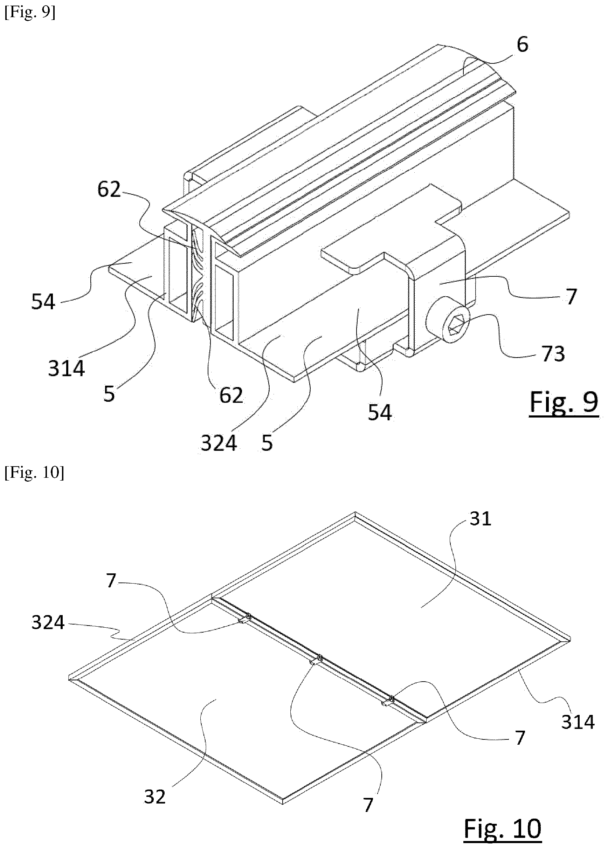

Ce serrage des pinces 7 entraîne le rapprochement des profilés 5 des cadres 314 et 324, en comprimant le joint d'étanchéité 6 entre les portions rectilignes des champ externe des panneaux photovoltaïques 31 et 32, comme le montrent les figures 8 et 9. Les lèvres 62 de ce joint d'étanchéité 6 entrent ainsi en contact étroit avec le champ externe 52 du profilé 5 formant le cadre 324, ce qui assure l'étanchéité de la jonction entre les panneaux photovoltaïques 31 et 32. Du fait de cette liaison étanche, il n'est pas nécessaire de prévoir une gouttière sous cette jonction.

De préférence, le contact entre les mors 711 et 712 des pinces 7 et les profilés 5 des cadres 314 et 324 se fait de telle sorte que le joint 6 soit placé entre les mors 711 et 712 de chaque pinces 7. Ce positionnement des pinces 7 permet d'éviter que le serrage des pinces 7 tende à déformer les profilés 5.

La [Fig.10] représente en perspective vue de dessous les deux panneaux photovoltaïques 31 et 32. Comme le montre cette figure, l'assemblage des panneaux photovoltaïques 31 et 32 se fait à l'aide de trois pinces 7, réparties sur la longueur des grand côtés du cadre rectangulaire de chaque panneau.

Après le serrage des pinces 7 à un niveau suffisant pour assurer la jonction, les deux panneaux photovoltaïques 31 et 32 assemblés peuvent, si nécessaire, être fixés à la structure de support 21. Quand les deux panneaux photovoltaïques 31 et 32 sont tous les deux fixés à la structure de support 21, il peut être possible de retirer certaines des pinces 7 serrant les panneaux photovoltaïques 31 et 32 l'un contre l'autre. En effet, dans ce cas, la fixation des panneaux photovoltaïques 31 et 32 à la structure de support 21 peut suffire à maintenir constant l'écartement entre certaines parties des portions rectilignes des champ externe 52 de ces panneaux photovoltaïques 31 et 32. Le maintien en place de certaines des pinces 7, et notamment de celles qui sont éloignées des points de fixation des panneaux photovoltaïques 31 et 32 à la structure de support 21, reste cependant indispensable pour éviter que la pression du joint 6 comprimé ne déforme les profilés 5, ce qui pourrait entrainer une perte d'étanchéité entre les panneaux photovoltaïques 31 et 32.

Le montage de la couverture 2 de l'abri photovoltaïque 1 peut ainsi se faire de façon très facile, l'assemblage de certains des panneaux photovoltaïques constituant cette couverture pouvant être fait de façon étanche. Cette jonction étanche peut notamment s'étendre horizontalement, dans une direction perpendiculaire au sens de la pente de la couverture 2. Par ailleurs, cette couverture 2 peut également se démonter très facilement. Les panneaux photovoltaïques n'ayant pas à être modifiés, ni percés pour être assemblés les uns aux autres, ils peuvent très facilement être réutilisés, dans leur configuration d'origine, après leur démontage.

## Revendications

1. Couverture (2) pour abri photovoltaïque (1), la couverture comprenant une structure de support (21) et au moins deux panneaux photovoltaïques (31, 32, 33), portés par ladite structure de support (21), chacun desdits panneaux photovoltaïques (31, 32, 33) étant constitué par au moins une plaque (311, 312) dont les bords sont encadrés par un cadre (314, 324), ledit cadre (314, 324) formant, autour de ladite plaque (311, 312), un champ externe (52) sensiblement parallèle au bord de ladite plaque (311, 312) et sensiblement perpendiculaire au plan de ladite plaque (311, 312), ledit champ externe (52) formant la surface périphérique du panneau photovoltaïque (31, 32, 33), lesdits panneaux photovoltaïques (31, 32, 33) étant juxtaposés, sensiblement dans un même plan, de telle sorte qu'une portion rectiligne du champ externe (52) d'un premier desdits panneaux photovoltaïques (31) soit en regard d'une portion rectiligne du champ externe (52) d'un second desdits panneaux photovoltaïques (32), ladite couverture (2) comprenant au moins un joint d'étanchéité (6) placé entre lesdites portions rectilignes de champs externes (52) desdits premier et second panneaux photovoltaïques (31, 32),
**caractérisée en ce que** ladite couverture (2) comprend au moins une pince de serrage (7), ladite pince (7) comprenant deux mors (711, 721), un premier desdits mors (711) prenant appui sur une surface du cadre (314) dudit premier panneau photovoltaïque (31) qui est orientée dans un sens opposé à ladite portion rectiligne du champ externe (52) dudit premier panneau photovoltaïque (31), et un second desdits mors (721) prenant appui sur une surface du cadre (324) dudit second panneau photovoltaïque (32) qui est orientée dans un sens opposé à ladite portion rectiligne du champ externe (52) dudit second panneau photovoltaïque (32),
ladite pince de serrage (7) présentant des moyens de réglage de l'écartement entre lesdits premier et second mors (711, 721), ledit joint d'étanchéité (6) étant comprimé entre lesdites portions rectilignes du champ externe (52) desdits premier et second panneaux photovoltaïques (31, 32), sous l'effet du serrage desdites portions rectilignes des champs externes (52) desdits premier et second panneaux photovoltaïques (31, 32) obtenu par lesdits moyens de réglage de ladite pince (7).

2. Couverture pour abri photovoltaïque selon la revendication précédente, **caractérisée en ce que** ledit joint d'étanchéité (6) est collé sur ladite portion rectiligne du champ externe (52) de l'un desdits premier ou second panneaux photovoltaïques (31, 32).

3. Couverture pour abri photovoltaïque selon l'une quelconque des revendications précédentes, **caractérisée en ce que** ledit joint d'étanchéité (6) présente des lèvres souples (62) aptes à être déformées par compression, sur au moins une de ses surfaces qui est en contact avec une desdites portions rectilignes du champ externe (52) sans y être collée.

4. Couverture pour abri photovoltaïque selon l'une quelconque des revendications précédentes, **caractérisée en ce qu'**elle comprend plusieurs desdites pinces (7) prenant appui chacune sur lesdits cadres (314, 324) desdits premier et second panneaux photovoltaïques (31, 32), lesdites pinces (7) étant réparties sur la longueur desdites portions rectilignes juxtaposées des champs externes (52) desdits premier et second panneaux photovoltaïques (31, 32).

5. Couverture pour abri photovoltaïque selon l'une quelconque des revendications précédentes, **caractérisée en ce qu'**au moins une desdites pinces (7) présente deux branches (71, 72) mobiles en translation l'une par rapport à l'autre, chacune desdites branches (71, 72) portant l'un desdits mors (711, 721).

6. Couverture pour abri photovoltaïque selon l'une quelconque des revendications précédentes, **caractérisée en ce que** lesdits mors (711, 721) d'au moins une desdites pinces (7) présentent des pointes (75).

7. Couverture pour abri photovoltaïque selon l'une quelconque des revendications précédentes, **caractérisée en ce que** lesdits moyens de réglage de l'écartement entre lesdits mors (711, 721) d'au moins l'une desdites pinces (7) comprennent au moins une vis.

8. Couverture pour abri photovoltaïque selon l'une quelconque des revendications précédentes, **caractérisée en ce que** lesdits premier et second panneaux photovoltaïques (31, 32) définissent un plan incliné, la jonction entre les portions rectilignes du champ externe (52) desdits premier et second panneaux photovoltaïques (31, 32) s'étendant selon une direction sensiblement horizontale, sensiblement perpendiculaire à la direction d'inclinaison maximale desdits premier et second panneaux photovoltaïques (31, 32).

9. Procédé d'assemblage d'une couverture (2) pour abri photovoltaïque (1) selon l'une quelconque des revendications précédentes, comprenant :
- une étape de positionnement, sur ladite structure de support (21), de deux panneaux photovoltaïques (31, 32), juxtaposés sensiblement dans un même plan, de telle sorte qu'une portion rectiligne du champ externe (52) d'un premier desdits panneaux photovoltaïques (31) soit en regard d'une portion rectiligne du champ externe (52) d'un second desdits panneaux photovoltaïques (32), et d'au moins un joint d'étanchéité (6) entre lesdites portions rectilignes du champ externe (52) desdits premier et second panneaux photovoltaïques (31, 32),
- une étape de mise en place d'au moins une pince de serrage (7), un premier des mors (711) de ladite pince (7), ou de chacune desdites pinces (7), prenant appui sur une surface du cadre (314) dudit premier panneau photovoltaïque (31) qui est orientée dans un sens opposé à ladite portion rectiligne du champ externe (52) dudit premier panneau photovoltaïque (31), et un second des mors (721) de ladite pince (7), ou de chacune desdites pinces (7), prenant appui sur une surface du cadre (324) dudit second panneau photovoltaïque (32) qui est orientée dans un sens opposé à ladite portion rectiligne du champ externe (52) dudit second panneau photovoltaïque (32),
- une étape de serrage de ladite pince (7), ou de chacune desdites pinces (7), entrainant la compression dudit joint d'étanchéité (7) entre lesdites portions rectilignes de champs externes (52) desdits premier et second panneaux photovoltaïques (31, 32).
